# EUROPEAN PATENT APPLICATION

(11) **EP 0 570 776 A1**
(43) Date of publication of application: **24.11.1993**
(21) Application number: 93107412.4
(22) Date of filing: 07.05.1993
(51) Int. Cl.: H04M 17/00, H04M 17/02

(54) **Method and apparatus for controlled credit facility in telephone subset**

(30) Priority: 21.05.1992 AU 2561/92; 20.07.1992 AU 3643/92
(71) Applicant: ALCATEL AUSTRALIA LIMITED, Alexandria, NSW 2015 (AU)
(72) Inventor: Jamons, Nicholas, Randwick, 2031, N.S.W. (AU); Thompson, Ian Edward, Earlwood, 2206, N.S.W. (AU)
(74) Representative: Pohl, Herbert, Dipl.-Ing

(57) **Abstract**

A method and apparatus for providing a controlled credit facility in a telephone subset. The subset is provided with a central processing unit (CPU) (3) and a keypad (4). The CPU is programmed by the proprietor of the subset with the keypad. After validation of a personal identification number, the proprietor can enter data representing a predetermined credit limit in a memory of the CPU. A client may then establish a connection via the PSTN using the subset. When the connection is established the CPU deducts stored charge unit data from the memory at predetermined periods until the credit limit is reached, whereupon the CPU disconnects the subset from the PSTN.

The subset may be coupled to a facsimile machine and the controlled credit facility used by a client for facsimile transmissions.

## Description

This invention relates to payphones and in particular to payphones for use in secure locations, that is, locations where the payphone can be supervised so that there is little or no possibility of vandalism. Such locations would be, for example, a small business or domestic environment.

It is known to provide subsets which can only be used after obtaining a key to unlock a disabling lock associated with the subset. Such an arrangement permits the proprietor of the subset some control over its use.

A disadvantage of the aforementioned key controlled subset is that with the availability of subscriber trunk dialing, international direct dialing, and the possibility of the introduction of timed local calls, the proprietor of the subset has uncertain control over telephone expenditure in certain environments.

In small business environments, proprietor owned payphones are sometimes installed for the use of customers. These payphones, being designed for unsecured locations, are relatively expensive to instal and have continuing maintenance costs. Moreover, problems sometimes arise with theft from coin boxes associated with the payphone.

It is an object of the present invention to provide a payphone arrangement which permits the proprietor of a subset to control the expenditure of calls from the subset by a particular user.

It is a further object of the present invention to provide a payphone arrangement which utilises telephone subsets that are not specifically designed for unsecured locations.

The present invention contemplates a subset arrangement having a controlled credit facility in which the proprietor of the subset permits a user to establish a call via the PSTN from the subset after the proprietor enters a credit limit into a programmable processor means in the subset. When the credit limit is reached the processor means disconnects the connection to the PSTN. The arrangement may be extended to transmissions from a facsimile machine coupled to the subset.

In a further adaption of the arrangement of the present invention the proprietor allocates respective accounts with PIN numbers to a number of users, say various members of a household. Periodically the proprietor calls up any allocated account on a display so that charges on that account can be settled. The latter arrangement could be used in a household where parents wished to control the cost of phone calls by their children.

In a still further adaption of the arrangement of the present invention a proprietor, for example a real estate agent, can allocate an account and credit limits to a subset connected to a leased premises, say a holiday home, for use by a lessee. The allocation of the account and credit parameters can be entered into the leased premises' subset via the public switching telephone network (PSTN) from the agent's subset. After expiration of the lease the account can be brought up and settled.

According to the present invention there is provided in a telephone subset including a programmable processor means and a keypad means, a method of providing a controllable credit facility when allowing said subset to be used to make a telephone call via a public switching telephone network connected thereto, said method comprising the steps of:
a) Upon said subset going off-hook, disable said subset's transmitter circuit with disabling means controlled by said processor means;
b) Analyse dial signals that are generated by said keypad to establish a connection with a telephone number via said public switching telephone network;
c) Determine a charge period of analysed dial signals from a look-up means in said processor means;
d) Enable said transmitter circuit with enabling means;
e) Periodically deduct predetermined charge units from data representing a predetermined credit limit previously entered with said keypad into memory means associated with said processor means;
f) Periodically examine remaining credit data in said memory means;
g) Disconnect connection to public switching telephone network upon reaching credit limit.

According to a further aspect of the present invention there is provided in a telephone subset including a programmable processor means, a keypad means, and a facsimile machine operatively coupled thereto, a method of providing a controllable credit facility when allowing said facsimilemachine to be used to transmit facsimile data via a public switching telephone network connected thereto, said method comprising the steps of:
a) Activate charge-over means coupled to an output of said processor means to couple said facsimile machine to said public switching telephone network;
b) Analyse dial signals generated by said facsimile machine that establish a connection with a desired number of a remote facsimile machine via said public switching telephone network;
c) Determine a charge period of analysed dial signals from a look-up means in said processor means;
d) Periodically deduct predetermined charge units from data representing a predetermined credit limit previously entered with said keypad into memory means associated with said processor means.
e) Periodically examine remaining credit data in said memory means;
f) Disconnect connection to public switching telephone network upon reaching credit limit.

According to a still further aspect of the present invention there is provided a telephone subset for providing a controllable credit facility when allowing said subset to be used to make a telephone call via a public switching telephone network connected thereto, said subset comprising a keypad means and a programmable processor means which includes means to disable said subset's transmitter circuit when said subset is brought off-hook, means to analyse dial signals generated by said keypad establishing connection with a called subscriber apparatus via said public telephone switching network, means to determine a charge period of analysed dial signals, means to enable said transmitter circuit, means to periodically deduct predetermined charge units from data representing a predetermined credit limit previously entered into memory means associated with said processor means, means to periodically examine remaining credit data in memory means, and means to disconnect connection with public switching telephone network upon reaching said predetermined credit limit.

In order that the invention may be readily carried into effect an embodiment thereof will now be described in relation to the accompanying drawings, in which:
Figure 1 schematically illustrates the payphone arrangement of the present invention.
Figure 2 schematically illustrates a further embodiment of the payphone arrangement shown in Figure 1.
Figure 3 schematically illustrates constituents of the controller shown in Figure 1.
Figure 4 is a flow chart of actions executed during the creation of a credit limit and a subsequent call from the subset arrangement as shown in Figures 1 to 3.
Figure 4a is a flow chart of actions executed during the creation of an account.
Figure 5 is a further embodiment of the present invention in which a facsimile machine is incorporated.
Figure 6 is a flow chart of actions executed during the initiation of a facsimile transmission.
Figure 7 is a further embodiment of the present invention in which credit limits are created in a subset at a remote location via the P STN.
Figure 8 is a flow chart of actions executed during the creation of credit limits in the arrangement of Figure 7.

Referring to the drawings, the arrangement comprises a telephone subset 1 coupled to the public switching network PSTN. Subset 1 includes a call instigator button 2. Coupled to subset 1 is a controller 3 having an associated keypad 4 and a liquid crystal display 5. Controller 3 is operatively coupled to a power supply 6, preferably a 12V supply. A speech detector arrangement may substitute the call instigator button 2.

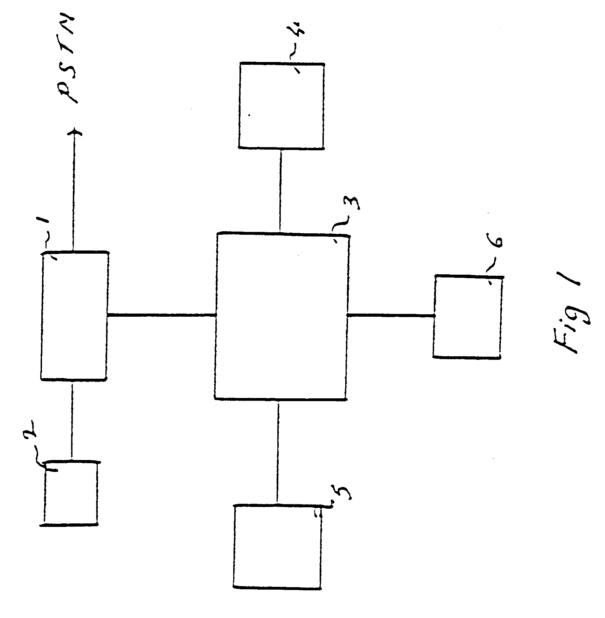

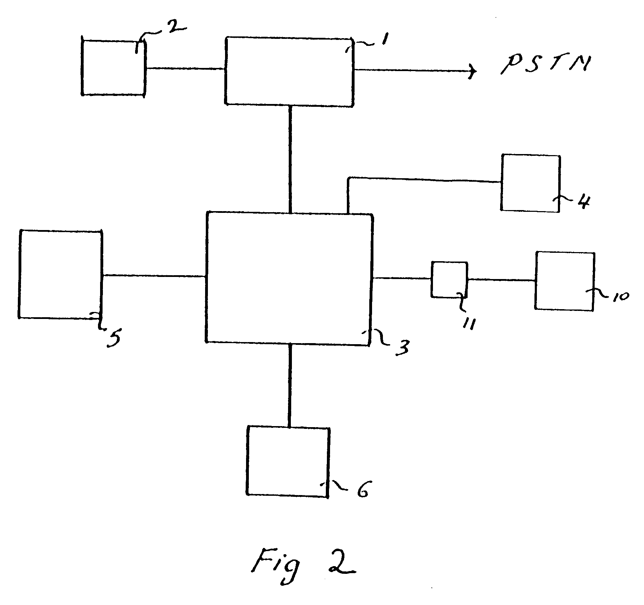

Referring to Figure 2, in addition to the keypad associated with subset 1, a remote keypad 10 may be incorporated in the arrangement shown in Figure 1. Remote keypad 10 is operatively coupled to controller 3 via a known RS232 serial communication port 11, and permits the proprietor of the subset to remotely enter a PIN number or increase credit remotely.

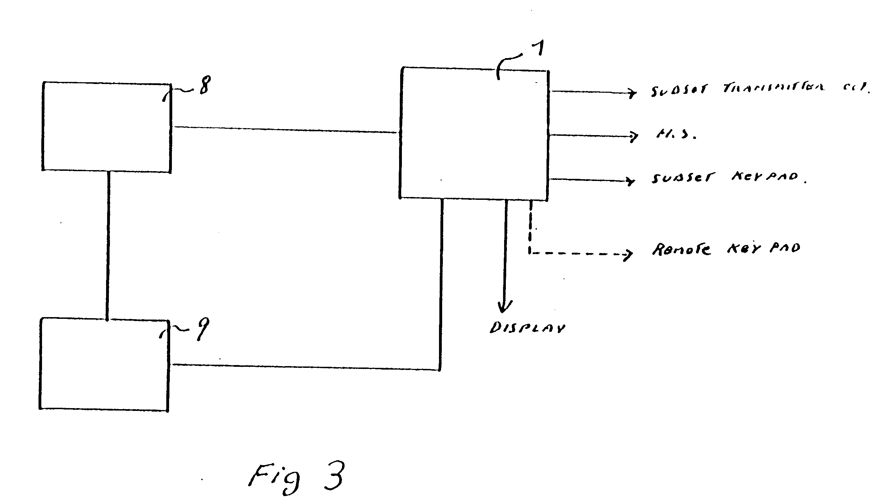

Referring to Figure 3, controller 3 comprises a central processing unit (CPU) 7, such as, for example, an Intel 8051; a known dialled number analyser 8, and a memory means (RAM/ROM) 9.

A first output of the CPU 7 is coupled to the subset's transmitter circuit for muting transmission until the call instigator button 2 is operated; a second output of the CPU 7 is coupled to the hook switch (HS) control pin in the subset's 1 dialler chip (not shown) for selectively controlling the subset's ability to seize exchange equipment when brought into the off-hook mode; a third output of CPU 7 is coupled to keypad 4 for entering instruction in the CPU and interrogating the CPU; and a fourth output of CPU 7 is coupled to liquid crystal display device 5 for displaying information related to stored charges and credit. A further output may be provided (shown in broken lines) for coupling the CPU to a remote keypad.

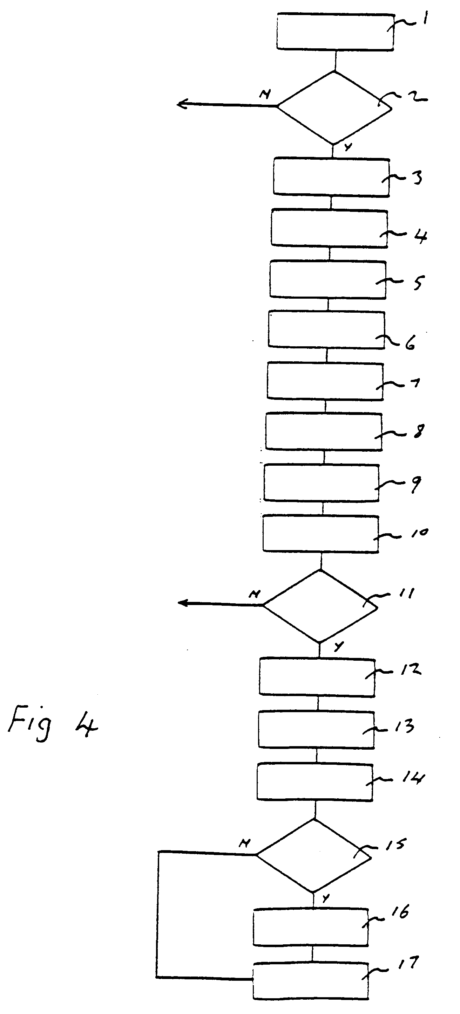

Referring to the flow chart shown in Figure 4 the routine operation of a user requesting the use of a proprietor's subset as shown in Figure 1 to 3, to make, say an STD call, is as follows:
First, in box 1 the proprietor's personal identification number (PIN) is entered by the proprietor using keypad 4 (Figure 1) or keypad 10 (Figure 2); in box 2 the CPU verifies the PIN entry; in box 3 the proprietor is prompted to enter a credit limit and enters an amount via keypad 4 (10), and the credit limit data is transferred to the CPU's RAM where it is utilised to control call duration; in box 4 the CPU sets the maximum call charge; in box 5 the user lifts the handset; in box 6 the CPU mutes the subset's transmitter; in box 7 the user dials desired number; in box 8 the CPU and the dial number analyser determine the charge period and charge unit from a look-up table; in box 9 the called party answers; in box 10 the user operates the call instigator button; in box 11 if the call instigation button is not pressed within a predetermined time the call reverts to an idle mode; otherwise, in box 12 the CPU removes the mute from the subset's transmitter; in box 13 the CPU deducts one charge unit from the credit data stored in memory; in box 14 the CPU begins to deduct a charge unit from the memory every charge period; in box 15 the CPU checks available credit and terminates the call if no credit remains; in box 16 the user terminates the call by replacing handset.

It may be desirable in some business environments to locate the subset in an area remote from the area where the proprietor of the subset normally works, for example the cashier's area in a cafe. Therefore a remote keypad can be located in the proprietor's area and coupled by wiring and serially linked to an input means of the subset's CPU whereby data can be entered into memory means of the CPU.

In the case where the subset is in a dometic environment, the proprietor creates with keypad entries individual accounts and assigns respective PIN number access. A user can pre-pay an amount or the proprietor can set a credit limit which is stored in the user's account. Referring to the flow chart shown in Figure 4a the routine operation of the creation of an account is as follows:
First, in box 18 the proprietor presses a sequence of keys to enter maintenance mode; in box 19 the proprietor's PIN is entered; in box 20 the CPU checks the validity of the proprietor's PIN; in box 21 account details and allocation of credit to various users is entered, or account information cleared; in box 22 the proprietor exits maintenance mode. The subset can now be used by a user having a PIN.

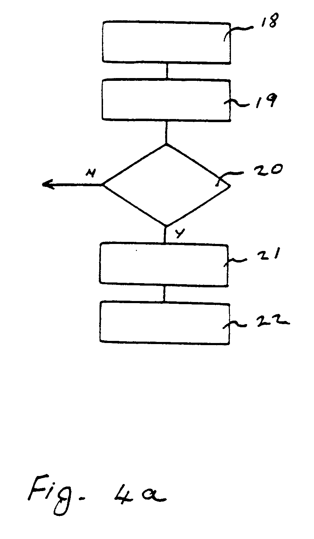

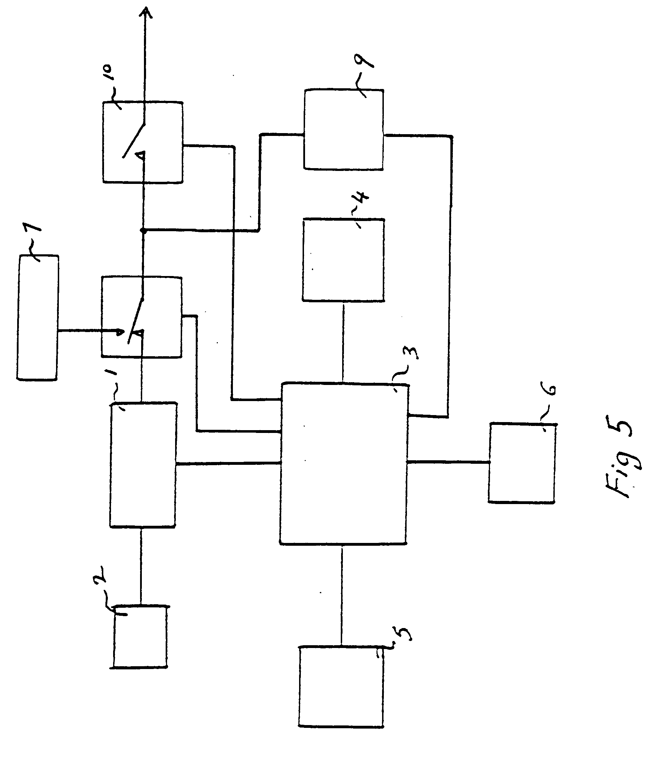

The embodiment shown in Figure 5 permits credit controlled facsimile transmissions from the arrangement shown in Figure 1. In addition to the circuit components already described in relation to Figure 1, this arrangement includes a facsimile means 7, a mode selector relay 8, a dual tone multi-frequency (DTMF) decoder 9, and a line control relay 10. The creation of an account by the proprietor is the same as described in relation to Figure 4.

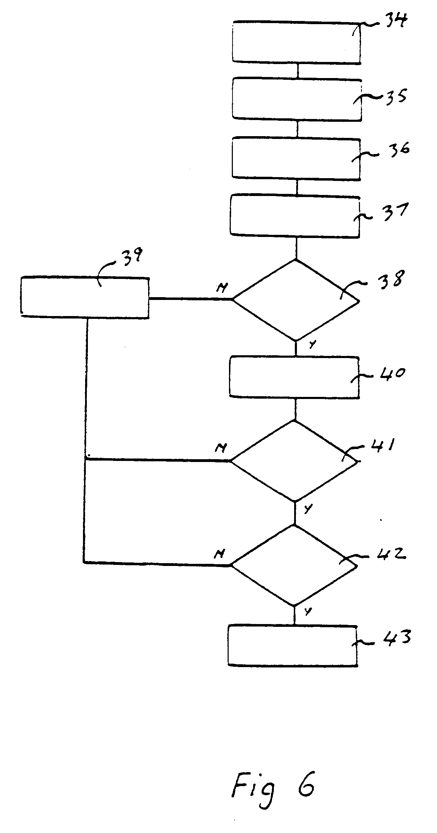

Referring to the flow chart shown in Figure 6, the routine operation of a user initiating a facsimile transmission from an arrangement as shown in Figure 5, is as follows:
First, in box 34 the user sets the subset for facsimile transmission mode; in box 35 the change-over relay is activated; in box 36 the facsimile machine dials the desired facsimile machine; in box 37 the dialled number is detected and analysed and charges determined; in box 38 credit availability is determined; in box 39 the call is terminated if no credit available; in box 40 the line condition is monitored as to whether call to called facsimile machine has been established; in box 41 call to be answered within predetermined time; in box 42 credit availability is checked periodically; in box 43 the facsimile machine terminates call.

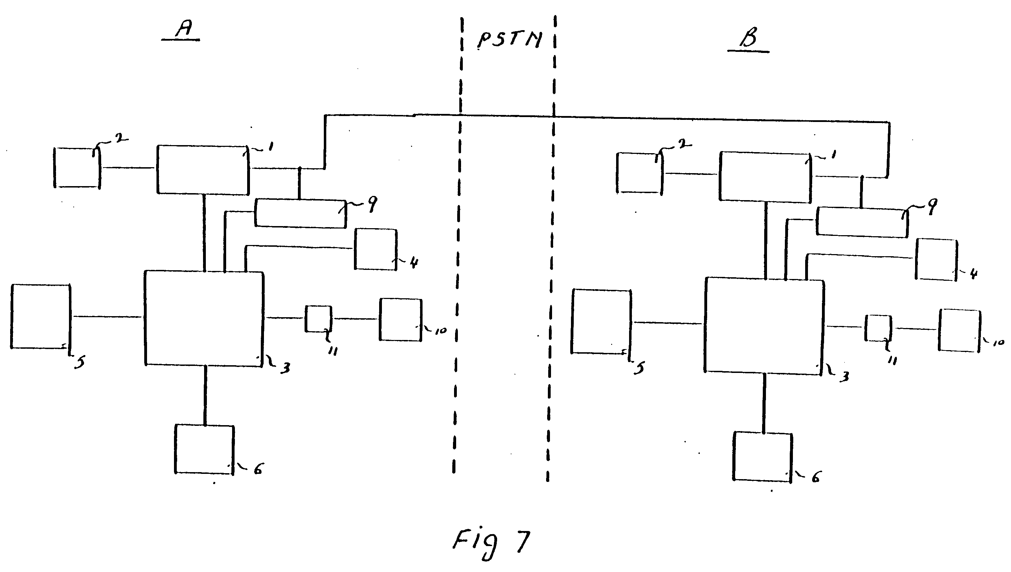

The embodiment shown in Figure 7 comprises a connection via the PSTN of two subset arrangements A and B each similar to the subset arrangement described in relation to Figure 2 but with the addition of a DTMF decoder. In this embodiment the proprietor of subset A, for example, a real estate agent, allocates an account and credit limits to a user of subset B, for example, a lessee of a holiday house, at a remote location.

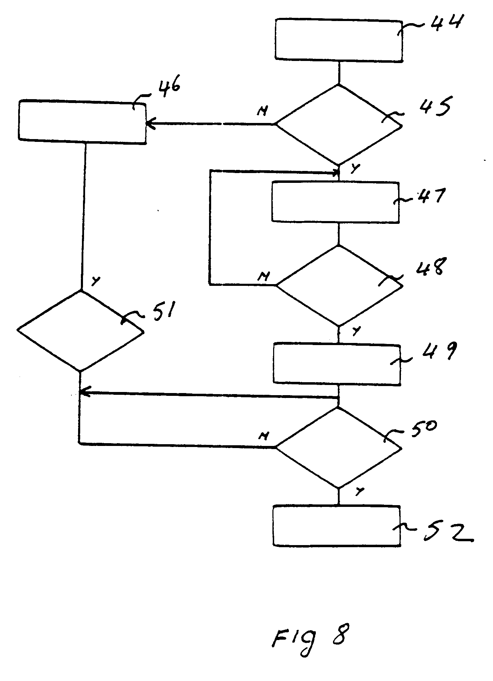

The flow chart shown in Figure 8 shows the routine operation of a proprietor entering credit information into the CPU 3 of subset arrangement B via the PSTN. The routine is as follows:
First, in box 44 the proprietor activates a down-load mode in subset A for transferring data to subset B, and enters his PIN; in box 45 PIN is validated; in box 46 subset A reverts to idle mode if PIN is invalid; in box 47 proprietor enters credit parameters and the telephone number of subset B; in box 48 the so entered credit parameters and subset B's telephone number are displayed for confirmation; in box 49 subset A's CPU causes entered dial signals to be transmitted to the PSTN where connection to subset B is established; in box 50 subset B responds to validate the connection and thereupon data is transferred between the two subsets; in box 51, if subset B does not respond within a predetermined time, subset A reverts to the idle mode.

While the present invention has been described with regard to many particulars it is understood that equivalents may be readily substituted without departing from the scope of the invention.

## Claims

1. In a telephone subset including a programmable processor means and a keypad means, a method of providing a contollable credit facility when allowing said subset to be used to make a telephone call via a public switching telephone network connected thereto, said method comprising the steps of:
a) Upon said subset going off-hook, disable said subset's transmitter circuit with disabling means controlled by said processor means;
b) Analyse dial signals that are generated by said keypad to establish a connection with a telephone number via said public switching telephone network;
c) Determine a charge period of analysed dial signals from a look-up means in said processor means;
d) Enable said transmitter circuit with enabling means;
e) Periodically deduct predetermined charge units from data representing a predetermined credit limit previously entered with said keypad into memory means associated with said processor means;
f) Periodically examine remaining credit data in said memory means;
g) Disconnect connection to public switching telephone network upon reaching credit limit.

2. A method as claimed in. claim 1, including in step e), prior to entering data representing said predetermined credit limit into said memory means, the step of entering data representing a personal identification number with said keypad for comparison with validation data stored in memory means of said processor means, and upon validation thereof enter data representing said predetermined credit limit.

3. A method as claimed in claim 2, including the step of providing visual display means controlled by said processor means to indicate information including call progress prompts and status of credit.

4. A method as claimed in claim 3, wherein said data representing said personal identification number and said data representing a predetermined credit limit are generated in a remote telephone subset which includes a processor means and keypad means, and transmitted therefrom via the public switching telephone network and entered into said memory means associated with said processor means;

5. In a telephone subset including a programmable processor means and a keypad means, a method of providing a controllable credit facility when allowing said subset to be used to make a telephone call via a public switching telephone network connected thereto, said method comprising the steps of:
a) Upon said subset going off-hook, disable said subset's transmitter circuit with disabling means controlled by said processor means;
b) With said keypad enter data representing an assigned personal identification number into memory means associated with said processor means;
c) Upon validation of said personal identification number enter dial signals with said keypad corresponding to desired telephone number for transmission to the public switching telephone network;
d) Analyse said dial signals in dial signal analyser means associated with said processor means;
e) Periodically deduct predetermined charge units from data representing predetermined credit limit stored in memory means associated with said processor means;
f) Periodically examine remaining credit data in said memory means;
g) Disconnect connection to public switching telephone network upon reaching credit limit.

6. A method as claimed in claim 3 or claim 5, including the step of providing a further keypad means remote from said subset and operatively coupled to input means of said processor means by wiring, whereby data representing said personal identification number/s and credit limit can be entered into memory means of said processor means.

7. A method as claimed in claim 6, including in step d), upon analyser means detecting data representing a predetermined sequence of data stored in memory means associated with said processor means, said transmitter circuit is enabled and connection to said public switching telephone network is controlled by said subset's hook-switch.

8. A method as claimed in claim 7, including the step of providing visual display means controlled by said processor means to indicate information including call progress, prompts, and status of credit.

9. In a telephone subset including a programmable processor means, a keypad means, and a facsimile machine operatively coupled thereto, a method of providing a controllable credit facility when allowing said facsimile machine to be used to transmit facsimile data via a public switching telephone network connected thereto, said method comprising the steps of:
a) Activate charge-over means coupled to an output of said processor means to couple said facsimile machine to said public switching telephone network;
b) Analyse dial signals generated by said facsimile machine that establish a connection with a desired number of a remote facsimile machine via said public switching telephone network;
c) Determine a charge period of analysed dial signals from a look-up means in said processor means;
d) Periodically deduct predetermined charge units from data representing a predetermined credit limit previously entered with said keypad into memory means associated with said processor means.
e) Periodically examine remaining credit data in said memory means;
f) Disconnect connection to public switching telephone network upon reaching credit limit.

10. A method as claimed in claim 9, including in step d), prior to entering data representing said predetermined credit limit into said memory means, entering data representing a personal identification number with said keypad for comparison with data stored in memory means associated with said processor means, and upon validation thereof entering data representing said predetermined credit limit.

11. A method as claimed in claim 10, including the step of providing visual display means controlled by said processor means to indicate information including call progress, prompts, and status of credit.

12. A telephone subset for providing a controllable credit facility when allowing said subset to be used to make a telephone call via a public switching telephone network connected thereto, said subset comprising a keypad means and a programmable processor means which includes means to disable said subset's transmitter circuit when said subset is brought off-hook, means to analyse dial signals generated by said keypad establishing connection with a called subscriber apparatus via said public telephone switching network, means to determine a charge period of analysed dial signals, means to enable said transmitter circuit, means to periodically deduct predetermined charge units from data representing a predetermined credit limit previously entered into memory means associated with said processor means, means to periodically examine remaining credit data in memory means, and means to disconnect connection with public switching telephone network upon reaching said predetermined credit limit.

13. A telephone subset as claimed in claim 12, further including means to validate data representing a personal identification number entered with said keypad for comparison with validation data stored in memory means of said processor means, prior to entering data representing said predetermined credit limit.

14. A telephone subset as claimed in claim 13, including visual display means coupled to outputs of said processor means and controlled thereby, for indicating information including call progress, prompts and status of credit.

15. A telephone subset as claimed in claim 14, wherein said means to enable said transmitter circuit comprises a push-button means provided on said subset, contacts of said push-button means being coupled to input means of said processor means.

16. A telephone subset as claimed in claim 15, including encoder/decoder means for transmitting/receiving data representing credit limits and personal identification number to a remote subset via said public switching telephone network, said remote subset being provided with a programmable processor means.

17. A telephone subset as claimed in claim 15, further including means to validate data representing at least a second personal identification number entered with said keypad for comparison with second validation data stored in memory means of said processor prior to entering dial signals with said keypad corresponding to a desired telephone number for transmission to said public switching network.

18. A telephone subset as claimed in claim 15, including further keypad means remote from said subset and operatively coupled to input means of said processor means by wiring, wherein data representing said personal identification number/s and credit limit can be entered into memory means of said processor means.

19. A telephone subset as claimed in claim 14, including a facsimile machine operatively coupled thereto, said subset including a mode selector switch means coupled to an output means of said processor means and controlled thereby for alternately coupling the said subset or said facsimile machine to said public switching telephone network, and a line control switch means coupled to further output means of said processor means for disconnecting said facsimile machine from said public switching telephone network on expiration of credit stored in said memory means.
